# EUROPÄISCHE PATENTSCHRIFT

(11) **EP 0 826 638 B1**
(45) Veröffentlichungstag und Bekanntmachung des Hinweises auf die Patenterteilung: **27.02.2002**
(21) Anmeldenummer: 97110975.6
(22) Anmeldetag: 02.07.1997
(51) Int. Cl.: C02F 3/12, C02F 3/22, C02F 3/02

(54) **Einrichtung zur Abwasserreinigung**
Apparatus for waste water purification
Dispositif d'épuration d'eau usée

(30) Priorität: 24.08.1996 DE 19634224
(43) Veröffentlichungstag der Anmeldung: 04.03.1998
(73) Patentinhaber: KÖRTING HANNOVER AG, D-30453 Hannover (DE)
(72) Erfinder: Meyer, Mathias, 31655 Stadthagen (DE)
(74) Vertreter: Leine, Sigurd, Dipl.-Ing.

(56) Entgegenhaltungen:
- EP-A- 0 465 043
- BE-A- 905 529
- DE-A- 2 447 337
- US-A- 4 997 557
- US-A- 5 110 510

## Beschreibung

Die Erfindung betrifft eine Einrichtung der im Oberbegriff des Anspruchs 1 genannten Art zur Abwasserreinigung.

Eine Einrichtung der betreffenden Art ist bekannt. Sie weist ein Becken für das Abwasser auf, in dem eine Strahlpumpe angeordnet ist, deren Saugseite mit einer Luftleitung zur Zuführung von Luft verbunden und deren Druckseite in das Bekken gerichtet ist. Eine Druckwasserpumpe entnimmt aus dem Becken Abwasser und speist damit die Treibdüse der Strahlpumpe. Die Strahlpumpe saugt auf ihrer Saugseite Luft aus der Atmosphäre an, die von dem aus der Treibdüse kommenden Treibstrom mitgerissen und mit diesem vermischt und in das in dem Becken befindliche Abwasser in Form von feinen Bläschen eingetragen wird.

Neben dem Eintrag von Luft in das Abwasser ist es erforderlich, dieses innig zu durchmischen. Dies erfolgt bei dem sogenannten SBR-Verfahren (Seqüenced Batch Reactor) diskontinuierlich, so daß zeitlich nacheinander abwechselnd aerobe und anaerobe Prozeßbedingungen geschaffen werden. Während des anaeroben Schrittes erfolgt keine Luftzufuhr.

Zur Durchmischung während der anaeroben Phase sind bei der bekannten Einrichtung mechanische Vorrichtungen vorgesehen, die das Durchmischen des Abwassers bewirken. Der Aufwand für diese mechanische Durchmischung ist sowohl hinsichtlich der Konstruktion und des Preises als auch hinsichtlich des Betrietes und der Störanfälligheit behächtlich.

Durch EP 0 465 043 A2 ist eine Einrichtung ähnlich der zuvor genannten betreffenden Art bekannt, die grundsätzlich identisch aufgebaut ist und bei der während der anaeroben Phase die zur Saugseite der Strahlpumpe führende Luftleitung geschlossen wird. Wie in dieser Schrift angegeben, wird durch dieses Schließen der Luftleitung die Wirkung der Strahlpumpe beträchtlich verringert. Zur Vermeidung dieses Nachteils sind bei der bekannten Strahlpumpe in der Wandung der Vakuumkammer Einlaßöffnungen angeordnet, durch die während der anaeroben Phase Abwasser aus dem Becken eintreten und durch den Strahlstrom mitgenommen werden kann. Diese Öffnungen in der Vakuumkammer sind auch während der aeroben Phase wirksam.

Der Erfindung liegt die Aufgabe zugrunde, eine Einrichtung der betreffenden Art zu schaffen, die einfacher in der Konstruktion und weniger störanfällig im Betrieb ist und eine gute Durchmischung während der anaeroben Phase sicherstellt.

Die der Erfindung zugrundeliegende Aufgabe wird durch die im Kennzeichen des Anspruchs 1 angegebene Lehre gelöst.

Der Grundgedanke dieser Lehre besteht darin, die Strahlpumpe nicht nur für das Eintragen von Luft, sondern auch für die Durchmischung des Abwassers in dem Becken zu verwenden. Zwar sind Strahlpumpen in der Praxis unterschiedlich ausgebildet, je nachdem ob sie für das Ansaugen von Luft oder für das Ansaugen von Wasser dienen sollen. Es wurde jedoch gefunden, daß in überraschender Weise erreicht werden kann, daß eine Strahlpumpe nicht nur für den Eintrag von Luft, sondern auch mit gutem Wirkungsgrad als Förderpumpe für das Abwasser zur Durchmischung desselben in dem Becken dienen kann. Damit entfallen jegliche mechanische Vorrichtungen zur Durchmischung. Es ist lediglich die Saugseite der Strahlpumpe in der aeroben Phase mit einer Luftzufuhr und während der anaeroben Phase mit dem Abwasser in dem Becken zu verbinden. Wegen des bekanntermaßen einfachen Aufbaus von Strahlpumpen ergibt sich bei der erfindungsgemäßen Lösung eine hohe Zuverlässigkeit und Betriebssicherheit bei gleichzeitig langer Lebensdauer.

Die Mittel zur Umschaltung der Saugseite der Strahlpumpe können in sehr einfacher und zweckmäßiger Weise durch ein Umschaltventil oder durch jeweils in der Luftleitung oder zwischen der Saugseite der Strahlpume und dem Becken angeordnete Absperrventile gebildet sein.

Eine besonders zweckmäßige Ausführungsform des im Anspruch 1 gekennzeichneten Grundgedankens der Erfindung ist im Anspruch 3 angegeben. Nach dieser Weiterbildung weisen die Mittel zur Umschaltung der Saugseite der Strahlpumpe zwei oberhalb des höchsten Standes des Abwassers in dem Becken miteinander verbundene Leitungen auf, von denen die eine die Luftleitung und die andere eine bis unterhalb des tiefsten Standes des Abwassers in dem Becken reichende Hebeleitung ist, wobei oberhalb des höchsten Standes des Abwassers in den Leitungen ein Belüftungsventil angeordnet ist. Bei dieser besonders zweckmäßigen Ausführungsform stellen die Luftleitung und die Hebeleitung physikalisch gesehen zwei miteinander kommunizierende Röhren dar. Ist das Belüftungsventil geschlossen, so erzeugt die Strahlpumpe in der Luftleitung und der Hebeleitung einen Unterdruck, so daß die Flüssigkeitssäule in der Hebeleitung angehoben wird, bis das Abwasser zu der Luftleitung herüber und dann zu der Saugseite der Strahlpumpe fließt. Nur während dieser Anfangsphase muß die Strahlpumpe einen Unterdruck erzeugen, der der höchsten Flüssigkeitssäule in der Hebeleitung entspricht. Sobald auch die Luftleitung mit Abwasser gefüllt ist, ist die kommunizierende Situation geschaffen, so daß die gesamte Saugleistung zur Förderung von Abwasser zur Verfügung steht.

Zum Umschalten auf die aerobe Phase braucht nun ganz einfach das Belüftungsventil geöffnet zu werden. Dadurch reißt der Flüssigkeitsstrom in den miteinander in Verbindung stehenden Röhren ab, so daß die Flüssigkeitssäule in der Hebeleitung absinkt und kein Abwasser mehr in die Luftleitung gelangen kann, über die nunmehr nur noch Luft von dem Belüftungsventil zu der Saugseite der Strahlpumpe gelangt.

Da das Belüftungsventil nur mit Luft beaufschlagt ist, kann es sehr einfach ausgeführt werden. Außerdem wird es nicht von dem aggressiven Abwasser beaufschlagt. Es kann daher nicht korrodieren oder in anderer Weise, z.B. durch Verschmutzung, beeinträchtigt werden. Wenn es auch grundsätzlich zweckmäßig ist, das Belüftungsventil oberhalb des höchsten Standes des Abwassers in dem Becken anzuordnen, so kann es grundsätzlich auch an anderer beliebiger Stelle angeordnet sein, wenn es nur dafür sorgt, daß Luft in die kommunizierende Luft- und Hebeleitung gelangen und somit die Flüssigkeitssäule darin abreißen kann. Diese Ausführungsform ist jedoch nicht so zweckmäßig wie die grundsätzlich im Anspruch 3 gekennzeichnete Ausführungsform, da das Belüftungsventil in diesem Fall innerhalb des Abwassers angeordnet ist und mit einer Belüftungsleitung verbunden sein muß.

Eine zweckmäßige Weiterbildung der im Anspruch 3 genannten Ausführungsform besteht darin, daß das Belüftungsventil an der höchsten Stelle der Leitungen, vorzugsweise in einer die Leitungen verbindenden Querleitung angeordnet ist. Dies trägt dazu bei, daß das Belüftungsventil nicht mit dem Abwasser in Berührung kommen kann und außerdem beim Öffnen des Belüftungsventils die schnellstmögliche Umschaltung erfolgt.

Das Belüftungsventil kann unmittelbar mit der Atmosphäre verbunden sein, so daß die Strahlpumpe Luft unmittelbar aus der Atmosphäre ansaugt. Es ist aber auch gemäß einer Weiterbildung der Erfindung zweckmäßig, wenn dem Belüftungsventil ein Gebläse oder ein Verdichter vorgeschaltet ist, so daß der Lufteintrag nicht nur von der Saugwirkung der Strahlpumpe, sonder zusätzlich von der Förderwirkung des Gebläses bzw. des Verdichters abhängt und damit der Lufteintrag erhöht ist.

Im Falle der Ausführungsform mit den kommunizierenden Leitungen besteht eine zweckmäßige Weiterbildung darin, daß wenigstens die oberhalb des Standes des Abwassers verlaufenden, miteinander verbundenen Teile der Luftleitung und der Hebeleitung an einem dem Stande des Abwassers folgenden Schwimmer angeordnet sind. Dies hat den Vorteil, daß der von der Strahlpumpe bei geschlossenem Belüftungsventil zu erzeugende Unterdruck, der zum Anheben der Flüssigkeitssäule in der Hebeleitung erforderlich ist, bei allen Ständen des Abwassers in dem Becken gleich ist. Der zum Anheben der Flüssigkeitssäule in der Hebeleitung notwendige Unterdruck kann daher so gering wie möglich und so groß bemessen werden, daß bei geöffnetem Belüftungsventil kein Abwasser über den höchsten Punkt der miteinander in Verbindung stehenden Leitungen hinwegfließen und somit das Ansaugen und Eintragen von Luft beeinträchtigt werden kann.

Bei der Ausführungsform mit dem Schwimmer ist es zweckmäßig, auch die Strahlpumpe an dem Schwimmer anzuordnen, vorzugsweise auch die Druckwasserpumpe zur Speisung der Treibdüse der Strahlpumpe.

Anhand der Zeichnung soll die Erfindung an Ausführungsbeispielen näher erläutert werden.
- Fig. 1: zeigt schematisch ein Ausführungsbeispiel gemäß der Erfindung,
- Fig. 2: zeigt eine zweckmäßige Weiterbildung der Ausführungsform gemäß Fig. 1,
- Fig. 3: zeigt eine zweckmäßige Weiterbildung der Ausführungsform gemäß Fig. 2 und
- Fig. 4: zeigt eine Abwandlung der Ausführungsform gemäß Fig. 2.

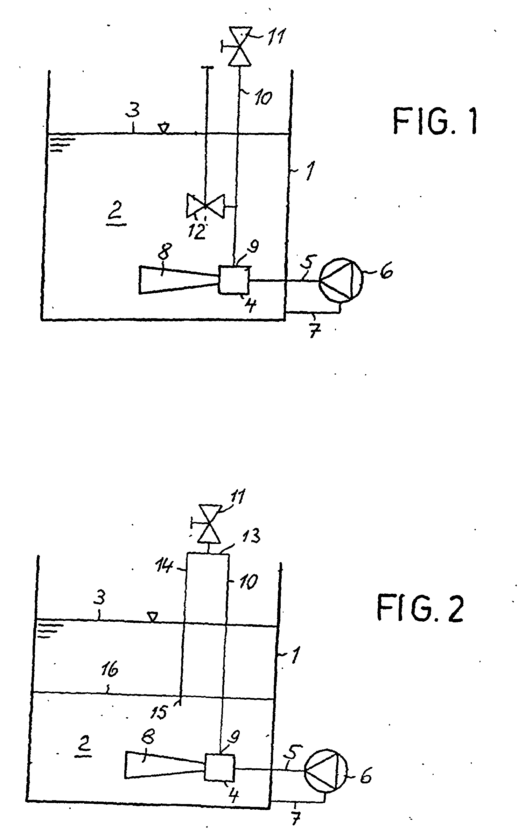

Fig. 1 zeigt ein Becken 1, in dem sich Abwasser 2 bis zu einem Flüssigkeitsspiegel 3 befindet. Im Bereich des Abwassers 2 ist ein Strahlpumpe 4 angeordnet, deren in der Zeichnung nicht dargestellte Treibdüse über eine Leitung 5 von einer Umwälzpumpe 6 gespeist ist, die über eine Leitung 7 Abwasser aus dem Becken 1 ansaugt. Eine Druckseite 8 der Strahlpumpe 4 ist in das Innere des Beckens 1 gerichtet. Eine Saugseite 9 der Strahlpumpe 4 ist über eine Luftleitung 10 mit einem Belüftungsventil 11 verbunden. Außerdem ist die Saugseite 9 über ein Ventil 12 mit dem Abwasser 2 in dem Bekken 1 verbunden. Das Belüftungsventil 11 und das Ventil 12 können von Hand oder durch einen Antrieb betätigbar sein.

Bei Betrieb der in Fig. 1 dargestellten Einrichtung ist in einer aeroben Phase das Ventil 12 geschlossen, während das Ventil 11 geöffnet ist. Auf diese Weise saugt die Strahlpumpe 4 mit ihrer Saugseite 9 über die Luftleitung 10 und das Belüftungsventil 11 Luft aus der Atmosphäre an. Die Luft wird von dem Treibstrom mitgerissen, mit diesem innig vermengt und in das Abwasser 2 eingetragen. Zum Übergang in die anaerobe Phase wird das Ventil 12 geöffnet und das Belüftungsventil 11 geschlossen, so daß die Strahlpumpe 4 mit ihrer Saugseite 9 über das Ventil 12 unmittelbar Abwasser 2 aus dem Becken 1 ansaugt. Treibstrom und Förderstrom treten mit hoher Geschwindigkeit auf der Druckseite 8 aus, so daß das Abwasser 2 in dem Becken 1 bewegt und verwirbelt wird. Zum Übergang in die aerobe Phase wird das Belüftungsventil 11 wieder geöffnet und das Ventil 12 geschlossen.

Die Ausführungsform gemäß Fig. 2 stellt eine Abwandlung der Ausführungsform gemäß Fig. 1 dar. Gleiche oder sich entsprechende Teile sind mit gleichen Bezugsziffern versehen. Bei diesem Ausführungsbeispiel ist das Ventil 11 weggelassen. Statt dessen ist die Belüftungsleitung 10 oberhalb des oberen Flüssigkeitsspiegels 3 über eine Querleitung 13 mit dem oberen Ende einer Hebeleitung 14 verbunden, deren unteres Ende 15 sich bis unter einen minimalen Flüssigkeitspiegel 16 erstreckt. Das Belüftungsventil 11 ist an die Querleitung 13 angeschlossen.

Bei Betrieb der Einrichtung gemäß Fig. 2 ist während der aeroben Phase, während der Luft durch die Strahlpumpe 4 in das Abwasser 2 eingetragen werden soll, das Belüftungsventil 11 geöffnet, so daß Luft durch das Belüftungsventil 11 und die Leitung 10 über die Saugseite 9 und die Druckseite 8 in das Abwasser 2 eingetragen wird. Der dabei in der Hebeleitung 14 anstehende Unterdruck ist so gering, daß die in der Hebeleitung 14 stehende Flüssigkeitssäule des Abwassers 2 praktisch kaum über den oberen Flüssigkeitsspiegel 3 angehoben wird.

Zum Umschalten in die anaerobe Phase wird das Belüftungsventil geschlossen. Durch den von der Strahlpumpe auf ihrer Saugseite 9 erzeugten, über die Luftleitung 10 und die Querleitung 13 in die Hebeleitung 14 wirkenden Unterdruck wird die Flüssigkeitssäule in der Hebeleitung 14 angehoben, bis das Abwasser über die Querleitung 13 und die Luftleitung 10 zu der Saugseite 9 strömt und schließlich mit dem Treibstrom auf der Druckseite 8 der Strahlpumpe 4 mit hoher Geschwindigkeit austritt. Dies bewirkt eine Bewegung und Durchwirbelung des Abwassers 2 in dem Becken 1.

Zum Zurückschalten zu der aeroben Phase wird wieder das Belüftungsventil 11 geöffnet. Dadurch reißt die Flüssigkeitssäule in der Hebeleitung 14 ab, so daß die darin stehende Flüssigkeitssäule bis in den Bereich des oberen Flüssigkeitsspiegels 3 absinkt. Die in der Luftleitung 10 stehende Flüssigkeitssäule verschwindet schnell über die Saugseite 9 der Strahlpumpe 4, so daß dann Luft durch das Belüftungsventil 11 über die Luftleitung 10 und die Saugseite 9 angesäugt wird und mit dem Treibstrom vermischt auf der Druckseite 8 der Strahlpumpe 4 austritt.

Verringert sich die Menge des Abwassers 2 in dem Becken 1, so sinkt der Flüssigkeitsspiegel 3 ab und bildet so den unteren Flüssigkeitsspiegel 16. Um auch in diesem Fall noch eine Ansaugung von Flüssigkeit durch die Hebeleitung 14 sicherzustellen, muß sich das untere Ende 15 der Hebeleitung 14 bis unter den unteren Flüssigkeitsspiegel 16 erstrecken.

Ist der untere Flüssigkeitsspiegel 16 wirksam, so vergrößert sich die Höhe, über die die Flüssigkeitssäule in der Hebeleitung 14 bis zu der Querleitung 13 angehoben werden muß. Der von der Strahlpumpe 4 erzeugte Unterdruck muß daher ausreichend groß sein, um diese Hebewirkung zu erreichen. Dieser Unterdruck ist aber nur während der Startphase erforderlich. Sobald auch die Luftleitung 10 vollständig mit Flüssigkeit gefüllt ist, ist ein System kommunizierender Röhren gebildet, so daß von der Strahlpumpe 4 keine Hebeleistung mehr aufgebracht zu werden braucht.

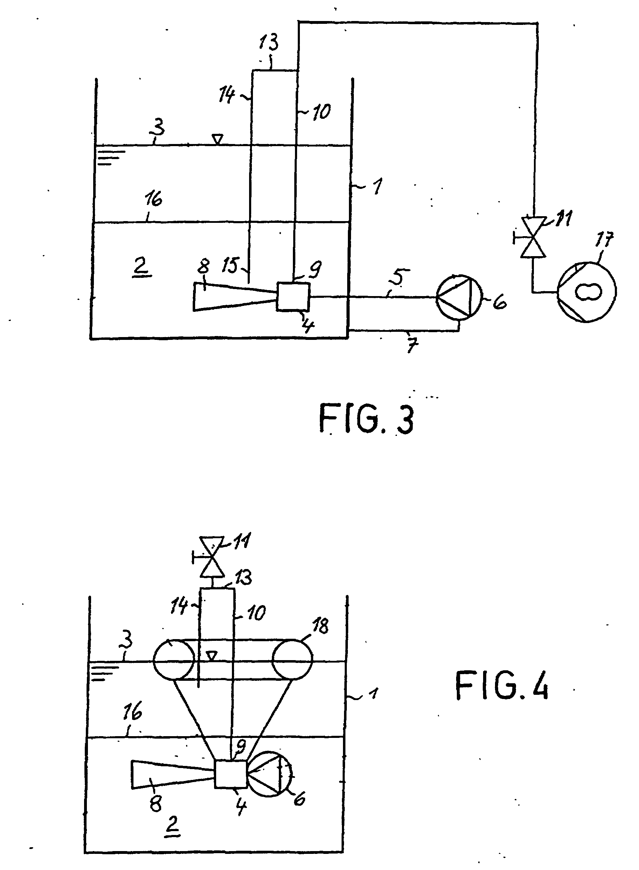

Fig. 3 zeigt eine Abwandlung des Ausführungsbeispiels gemäß Fig. 2. Gleiche oder sich entsprechende Teile sind mit gleichen Bezugsziffern versehen. Der Unterschied besteht darin, daß das Belüftungsventil 11 nicht mit der Atmosphäre, sondern mit einem Gebläse 17 verbunden ist. Dadurch addiert sich während der aeroben Phase der Förderdruck des Gebläses 17 zu dem Saugdruck der Strahlpumpe 4, so daß die gesamte geförderte und in das Abwasser eingetragene Luftmenge erhöht ist.

Fig. 4 zeigt eine andere Abwandlung der Ausführungsform gemäß Fig. 2. Gleiche oder sich entsprechende Teile sind mit gleichen Bezugsziffern versehen. Der Unterschied besteht darin, daß die Strahlpumpe 4, die Luftleitung 10, die Hebeleitung 14 wie auch die Querleitung 13 und das Belüftungsventil 11 an einem Schwimmer 18 aufgehängt sind, der im dargestellten Zustand auf dem Abwasser 2 in Höhe des oberen Flüssigkeitsspiegels 3 schwimmt. Auch die Umwälzpumpe 6 ist über die Strahlpumpe 4 unmittelbar an dem Schwimmer 18 aufgehängt. Sinkt der Flüssigkeitsspiegel 3 ab, beispielsweise auf das Niveau des Flüssigkeitsspiegels 16, so sinken auch Luftleitung 10, Hebeleitung 14, Querleitung 13 und Belüftungsventil 11 entsprechend mit ab. Im Ergebnis ist die Höhe des höchsten Punktes der Verbindung von Luftleitung 10 und Hebeleitung 14, nämlich hier der Querleitung 13, über dem jeweiligen Flüssigkeitsspiegel immer gleich, so daß auch die Flüssigkeitssäule in der Hebeleitung 14 bei Beginn der anaeroben Phase immer um die gleiche Höhe angehoben werden muß, ganz gleich, wie hoch der Stand des Flüssigkeitsspiegels des Abwassers 2 in dem Behälter 1 ist.

## Patentansprüche

1. Einrichtung zur Abwasserreinigung,
mit einem Becken für das Abwasser,
mit einer Strahlpumpe, deren Saugseite mit einer Luftleitung zur Zuführung von Luft verbunden und deren Druckseite in das Becken gerichtet ist,
**dadurch gekennzeichnet, daß** Mittel zur Umschaltung der Luftleitung (10) von der Luftansaugung zur Abwasseransaugung aus dem Becken (1) vorgesehen sind.

2. Einrichtung nach Anspruch 1, **dadurch gekennzeichnet, daß** die Mittel zur Umschaltung der Luftleitung (10) durch ein Umschaltventil gebildet sind, durch das die Luftleitung (10) entweder mit der Luft zur Ansaugung von Luft oder mit dem Abwasser in dem Becken (1) für Abwasser verbindbar ist.

3. Einrichtung nach Anspruch 1, **dadurch gekennzeichnet, daß** die Mittel zur Umschaltung durch ein Belüftungsventil (11) in der Luftleitung (10) und durch ein Ventil (12) zwischen der Luftleitung (10) und dem Abwasser (2) in dem Becken (1) gebildet sind, wobei die Ventile (11, 12) wechselweise betätigbar sind.

4. Einrichtung nach Anspruch 1, **dadurch gekennzeichnet, daß** die Mittel zur Umschaltung der Saugseite (9) der Strahlpumpe (4) zwei oberhalb des höchsten Flüssigkeitsspiegels (3) des Abwassers (2) in dem Becken (1) miteinander verbundene Leitungen aufweisen, von denen die eine die Luftleitung (10) und die andere eine bis oberhalb des tiefsten Flussigkeitsspiegels (16) des Abwassers (2) in dem Becken (1) reichende Hebeleitung (14) ist, wobei oberhalb des höchsten Flüssigkeitsspiegels (3) des Abwassers (2) in den Leitungen ein Belüftungsventil (11) angeordnet ist.

5. Einrichtung nach Anspruch 4, **dadurch gekennzeichnet, daß** das Belüftungsventil (11) an der höchsten Stelle der Leitungen, vorzugsweise in einer die Leitungen verbindenden Querleitung (13) angeordnet ist.

6. Einrichtung nach Anspruch 4, **dadurch gekennzeichnet, daß** das Belüftungsventil (11) unmittelbar mit der Atmosphäre verbunden ist.

7. Einrichtung nach Anspruch 4, **dadurch gekennzeichnet, daß** dem Belüftungsventil (11) ein Gebläse (17) oder ein Verdichter vorgeschaltet ist.

8. Einrichtung nach Anspruch 4, **dadurch gekennzeichnet, daß** wenigstens die oberhalb des Flüssigkeitsspiegels (3 bzw. 16) verlaufenden Teile der Luftleitung (10) und der Hebeleitung (14) an einem dem Stande des Flüssigkeitsspiegels (3 bzw. 16) folgenden Schwimmer (18) angeordnet sind.

9. Einrichtung nach Anspruch 8, **dadurch gekennzeichnet, daß** an dem Schwimmer (18) auch die Strahlpumpe (4) angeordnet ist.

10. Einrichtung nach Anspruch 8, **dadurch gekennzeichnet, daß** an dem Schwimmer (18) auch eine Umwälzpumpe (6) zur Speisung der Treibdüse der Strahlpumpe (4) angeordnet ist.

## Claims

1. An apparatus for waste water purification, having a reservoir for the waste water, with a jet pump whose suction side is connected with an air conduit for supplying air, and the pressure side of which is directed into the reservoir, **characterised in that** means are provided for reversing the air conduit (10) from the air intake to waste water intake from the reservoir (1).

2. An apparatus as according to claim 1, **characterised in that** the means for reversing air conduit (10) are constructed from a reversing valve which can be connected with the air for the intake of air, or with the waste water in the reservoir (1) for waste water.

3. An apparatus as according to claim 1, **characterised in that** the means for reversal are formed by a ventilation valve (11) in air conduit (10) and by a valve (12) between air conduit (10) and the waste water (2) in reservoir (1), and where valves (11,12) are actuated alternately.

4. An apparatus as according to claim 1, **characterised in that** the means for reversing, the suction side (9) of jet pump (4) has two conduits connected to one another above the highest waste water (2) fluid level (3) in the reservoir (1), one of which is the air conduit (10) and the other is a lifting conduit (14) which reaches to above the lowest waste water (2) fluid level (16) in the reservoir (1), and where a ventilation valve (11) is arranged in the conduit above the highest waste water (2) fluid level (3).

5. An apparatus as according to claim 4, **characterised in that** ventilation valve (11) is arranged at the highest position of the conduits, preferably in a cross conduit (13) connecting them.

6. An apparatus as according to claim 4, **characterised in that** ventilation valve (11) is directly connected to the atmosphere.

7. An apparatus as according to claim 4, **characterised in that** a fan (17) or a compressor is connected in front of ventilation valve (11).

8. An apparatus as according to claim 4, **characterised in that** at least the parts of air conduit (10) and lift conduit (14) running above fluid level (3 or 16) are arranged on a float (18) following the position of fluid level (3 or 16).

9. An apparatus as according to claim 8, **characterised in that** jet pump (14) is also arranged on float (18).

10. An apparatus as according to claim 8, **characterised in that** also a circulating pump (6) for feeding the drive nozzle of jet pump (4) is arranged on float (18).

## Revendications

1. Dispositif d'épuration des eaux usées,
avec un bassin pour les eaux usées,
avec une pompe à jet dont le côté d'aspiration est relié à une conduite d'air pour l'amenée d'air et dont le côté de refoulement est dirigé vers le bassin,
**caractérisé en ce que** sont prévus des moyens de commutation de la conduite d'air (10), de l'aspiration d'air à l'aspiration des eaux usées hors du bassin (1).

2. Dispositif selon la revendication 1,
**caractérisé en ce que** les moyens de commutation de la conduite d'air (10) sont formés par une soupape d'inversion grâce à laquelle la conduite d'air (10) peut être en liaison soit avec l'air pour une aspiration d'air soit avec les eaux usées dans le bassin (1) pour les eaux usées.

3. Dispositif selon la revendication 1,
**caractérisé en ce que** les moyens de commutation sont constitués par une soupape d'aération (11) dans la conduite d'air (10) et par une soupape (12) entre la conduite d'air (10) et les eaux usées (2) dans le bassin (1), les soupapes (11, 12) étant actionnables de manière alternée.

4. Dispositif selon la revendication 1,
**caractérisé en ce que** les moyens de commutation du côté d'aspiration (9) de la pompe à jet (4) présentent deux conduites reliées l'une avec l'autre au-dessus du niveau de liquide le plus haut (3) des eaux usées (2) dans le bassin (1), dont l'une est la conduite d'air (10) et l'autre est une conduite de relevage (14) s'étendant dans le bassin (1) jusqu'au-dessus du niveau de liquide le plus bas (3) des eaux usées (2), une soupape d'aération (11) étant disposée dans les conduites au-dessus du niveau du liquide le plus haut (3) des eaux usées (2).

5. Dispositif selon la revendication 4,
**caractérisé en ce que** la soupape d'aération (11) est disposée à la position la plus haute des conduites, de préférence dans une conduite transversale (13) reliant les conduites.

6. Dispositif selon la revendication 4,
**caractérisé en ce que** la soupape d'aération (11) est reliée directement à l'atmosphère.

7. Dispositif selon la revendication 4,
**caractérisé en ce qu'**avec la soupape d'aération (11), une buse (17) ou un ventilateur est monté en série.

8. Dispositif selon la revendication 4,
**caractérisé en ce que**, au moins les parties de la conduite d'air (10) et de la conduite de relevage (14) s'étendant au-dessus du niveau de liquide le plus haut (3 ou respectivement 16) sont disposées sur un flotteur (18) qui suit l'état du niveau de liquide (3 ou respectivement 16).

9. Dispositif selon la revendication 8,
**caractérisé en ce que**, sur le flotteur (18) est également disposée la pompe à jet (4).

10. Dispositif selon la revendication 8,
**caractérisé en ce que**, sur le flotteur (18), est également disposée une pompe de circulation (6) pour l'alimentation de la buse d'entraînement de la pompe à jet (4).
